# EUROPÄISCHE PATENTSCHRIFT

(11) **EP 1 647 176 B1**
(45) Veröffentlichungstag und Bekanntmachung des Hinweises auf die Patenterteilung: **23.01.2008**
(21) Anmeldenummer: 05021927.8
(22) Anmeldetag: 07.10.2005
(51) Int. Cl.: A01D 34/54, A01D 34/74

(54) **Gelenkanordnung**
Joint assembly
Ensemble d'articulation

(30) Priorität: 15.10.2004 DE 202004015965 U
(43) Veröffentlichungstag der Anmeldung: 19.04.2006
(73) Patentinhaber: Wolf-Garten AG, 4702 Oensingen (CH)
(72) Erfinder: Held, Peter, 57584 Scheuerfeld (DE); Kipping, Andreas, 57537 Selbach (DE)
(74) Vertreter: Koch, Günther

(56) Entgegenhaltungen:
- DE-A1- 10 142 072
- DE-A1- 19 844 439
- US-A- 4 167 093
- US-A- 5 230 208

## Beschreibung

Die Erfindung bezieht sich auf eine Vierrad-Höheriverstellung für Gartengeräte mit einer Gelenkanordnung, bestehend aus einer Koppelstange und daran über Rastzapfen angelenkten Schwingen, die an gekröpften Radachsen angreifen.

Eine derartige Gelenkanordnung für Rasenpflegemaschinen ist aus der DE 101 42 072 A1 bekannt. Bei derartigen Gelenkanordnungen sind die beiden an den Enden der Koppelstange angeordneten Gelenke und ihre Rastzapfen einer erheblichen Belastung unterworfen, da sie das Gewicht des Gerätes (z.B. Rasenmäher einschließlich Schnittgut) aufnehmen müssen. Aus Gründen einer Verminderung der Herstellungs- und Montagekosten ist es erwünscht, Funktionselemente der Gartengeräte allgemein aus Kunststoffteilen zu fertigen, die auf einfache Weise miteinander verrastet werden können. Ein Ersatz der bisher aus Metallteilen gefertigten Gelenkanordnung durch eine Kunststoffausbildung erweist sich nicht als praktikabel, weil bei gleichen Abmessungen derartige Kunststoffgelenke die auftretenden Belastungen nicht aufnehmen können und eine Dimensionierung, die die erforderliche Tragfähigkeit besitzt, nicht realisiert werden kann.

Der Erfindung liegt daher die Aufgabe zugrunde, derartige Gelenkanordnungen so auszubilden, dass hierfür kompakte Kunststoffteile mit relativ geringen Abmessungen verwendet werden können, die die auftretenden Belastungen mit Sicherheit aufnehmen können.

Gelöst wird die gestellte Aufgabe durch die im Kennzeichnungsteil des Anspruchs 1 angegebenen Merkmale. Durch diese Doppelgelenkanordnung können die wesentlichen Betriebskräfte durch die äußeren zusätzlichen Radiallager übernommen werden, wodurch die Flächenpressung wesentlich verringert wird und die Gelenkbolzen (Rastbolzen) zwar zur Aufnahme der Betriebskräfte beitragen können, jedoch von dieser Funktion im Wesentlichen durch das äußere Radiallager entlastet sind und durch den Formschluss mit der Koppelstange lediglich verhindern müssen, dass sich die Gelenkteile nicht voneinander lösen.

Die Montagefreundlichkeit der erfindungsgemäßen Anordnung basiert darauf, dass die Koppelstange mit den Federlaschen der Schwingen verrastet wird und die Schwingen auch an den Abkröpfungen der Radachsen aufgerastet werden können. Durch den Wegfall zusätzlicher Verbindungselemente und die unkomplizierte vertikale Montagebewegung der Koppelstange ergibt sich eine wesentliche Kostenersparnis bei der Montage.

Ausgestaltungen der Erfindung ergeben sich aus den Unteransprüchen.

Weitere Ausgestaltungen der Erfindung ergeben sich aus den Unteransprüchen.

Nachstehend wird ein Ausführungsbeispiel der Erfindung anhand einer Vierrad-Höhenverstellung für Gartengeräte beschrieben. In der Zeichnung zeigen:
Fig. 1 zeigt eine perspektivische Teildarstellung der für die Höhenverstellbarkeit eines Gartengerätes wesentlichen Teile des Fahrgestells;
Fig. 2 ist eine teilweise aufgebrochene Seitenansicht des Fahrgestells nach Fig. 1;

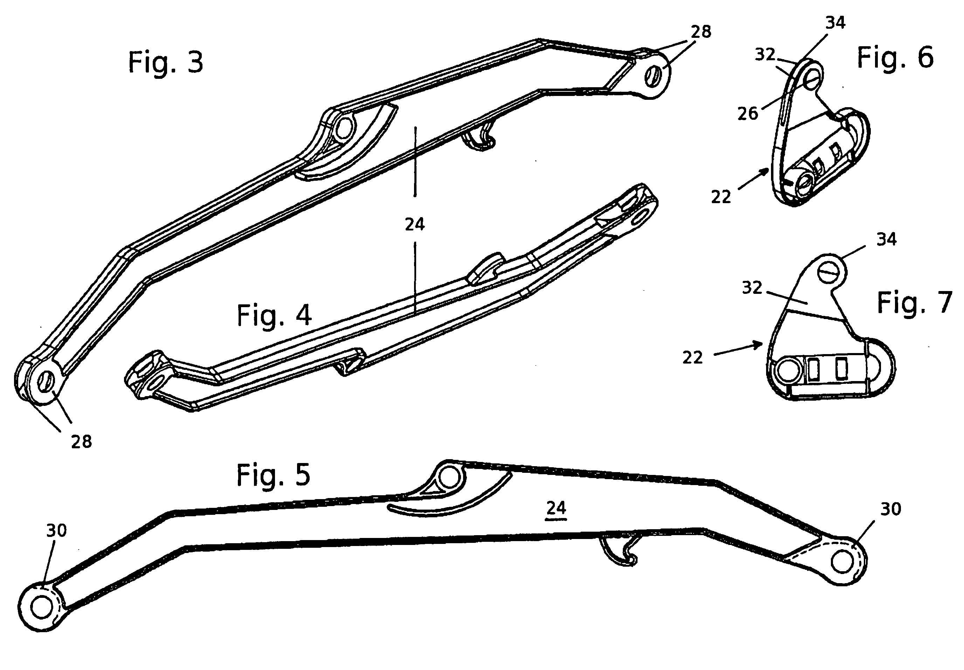

Fig. 3, 4 und 5 sind verschiedene Ansichten der Koppelstange für die gekröpften Radachsen;
Fig. 6 und 7 sind Ansichten der die Achskröpfung mit den Koppelstangengelenken verbindenden Schwinge.

Die Vorderräder 10 und die Hinterräder 12 eines Gartengerätes sind auf Achsstummeln 14 der gekröpften Vorderachse 16 bzw. der Hinterachse 18 drehbar gelagert. Auf einer Seite sind auf die Abkröpfungen 20 von Vorder- und Hinterachse Schwingen 22 durch Aufrastung festgelegt. Diese Schwingen 22 sind mit der Koppelstange 24 über Rastzapfen 26 gelenkig verbunden. Die Verbindung der Schwingen 22 mit der Koppelstange 24 erfolgt über eine Rastverbindung, die keine weiteren Verbindungselemente benötigt. Die Achsen 16 und 18 tragen das Chassis des in der Zeichnung nicht dargestellten Gartengerätes, an dem die Koppelstange 24 in verschiedenen Raststellungen festlegbar ist. Die Höheneinstellung erfolgt durch Verschiebung der Koppelstange 24, wodurch die Achsen 16 und 18 um die Radstummelachsen 14 verschwenkt und dadurch parallelogrammartig in ihrer Höhe verstellt werden können.

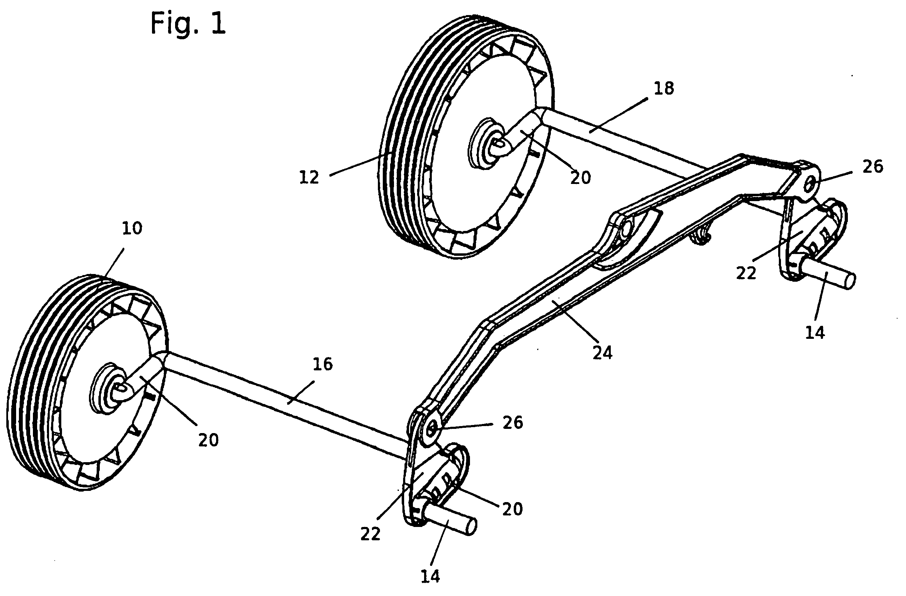

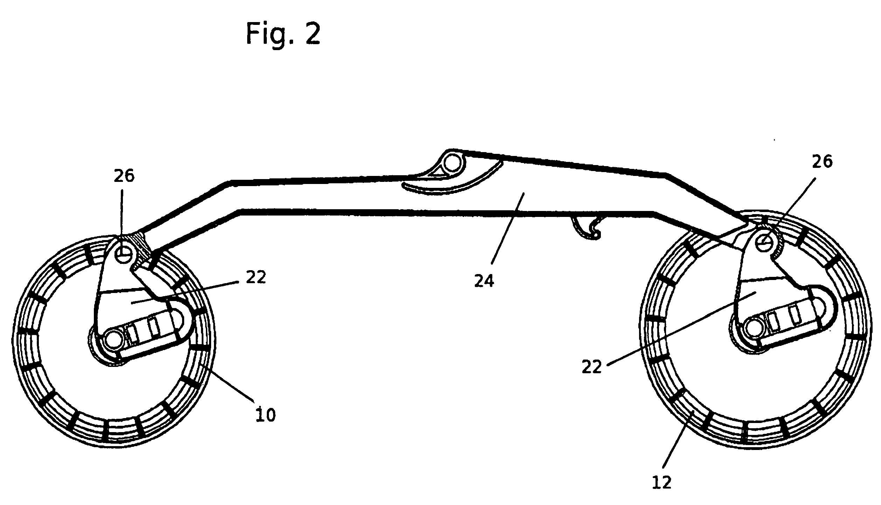

Die profiliert ausgebildete, vorzugsweise aus Kunststoff bestehende Koppelstange 24 weist an ihren Enden jeweils zwei im axialen Abstand angeordnete Lageraugen 28 auf, die den Rastzapfen 26 aufnehmen und zwischen denen eine zur Lageraugenachse konzentrische offene Gelenkschale 30 angeordnet ist. Zwischen die Lageraugen 28 sind Federlaschen 32 der Schwingen 22 eingefügt und mit diesen über den Rastzapfen verbunden. Die Federlaschen weisen konzentrisch zur Zapfenachse kreisbogenförmige Traglager 34 auf, die auf den kreisbogenförmigen Gelenkschalen 30 ablaufen und mit diesen zusammen ein radiales Gleitlager bilden. Dadurch werden die Betriebskräfte, die auf die beiden Querlager wirken, im Wesentlichen von den kreisbogenförmigen Traglagerflächen 30 bzw. 34 aufgenommen, die großflächig ausgebildet sein können und aufeinander ablaufen. Die Rastzapfen 26 können zusätzlich zur Aufnahme der Betriebskräfte beitragen. Ihre Funktion besteht jedoch im Wesentlichen darin, durch den Formschluss mit der Koppelstange zu verhindern, dass sich die Schwingen beim Anheben des Gerätes (Anheben der Achsen 16 und 18) aus den Gelenkschalen herausdrehen. Die Federlaschen 32 sind hakenförmig ausgebildet und gewährleisten mit ihren kreisbogenförmigen Druckflächen, dass die Schwingen in den Gelenkschalen der Koppelstange zur Veränderung der Arbeitshöhe des Gerätes eine begrenzte Drehbewegung ausführen können. In den Fig. 1 und 2 ist jeweils die Stellung dargestellt, in der das Chassis die oberste Arbeitsstellung einnimmt.

Durch die zusätzlich zu der Zapfenlagerung vorgesehene äußere Radiallageranordnung können die gelenkig miteinander verbundenen Teile leichter, insbesondere auch aus Kunststoff, ausgebildet werden.

Die vorstehend beschriebene Gelenkanordnung ist insbesondere für Gartengeräte, wie z.B. Rasenmäher, bestimmt, kann jedoch auch überall dort mit Vorteil angewendet werden, wo eine derartige Doppellageranordnung ähnliche Vorteile bezüglich der Abstützung und Führung ergibt.

### Bezugszeichenliste

- 10: Vorderräder
- 12: Hinterräder
- 14: Achsstummel
- 16: Vorderachse
- 18: Hinterachse
- 20: Abkröpfungen
- 22: Schwingen
- 24: Koppelstange
- 26: Rastzapfen
- 28: Lageraugen
- 30: Gelenkschale
- 32: Federlasche
- 34: Traglager

## Patentansprüche

1. Vierrad-Höhenverstellung für Gartengeräte mit einer Gelenkanordnung, bestehend aus einer Koppelstange (24) und daran über Rastzapfen (26) angelenkten Schwingen (22), die an gekröpften Radachsen (16, 18) angreifen,
**dadurch gekennzeichnet, dass** im Gelenkabschnitt die Enden der Koppelstange (24) und die Schwingen (22) konzentrisch zur Rastzapfenachse mit aufeinander ablaufenden kreisbogenförmigen Traglagerflächen (30, 34) versehen sind.

2. Höhenverstellung nach Anspruch 1,
**dadurch gekennzeichnet, dass** die Verbindung der Schwingen (22) mit der Koppelstange (24) durch eine Rastverbindung erfolgt.

3. Höhenverstellung nach den Ansprüchen 1 und 2,
**dadurch gekennzeichnet, dass** die Koppelstangenenden zwei im Abstand angeordnete Lageraugen (28) tragen, zwischen denen eine einseitig offene kreisbogenförmige Gelenkschale (30) liegt und dass die Schwingen (22) zwischen die beiden Augen (28) eingreifen und sich mit ihren kreisbogenförmigen Traglagerflächen (34) an der Gelenkschale (30) abstützen.

4. Höhenverstellung nach den Ansprüchen 1 bis 3,
**dadurch gekennzeichnet, dass** Koppelstange (24) und/oder Schwingen (22) aus Kunststoffprofilen ausgebildet sind.

5. Höhenverstellung nach Anspruch 3,
**dadurch gekennzeichnet, dass** die Schwingen (22) zwei im axialen Abstand zueinander angeordnete hakenförmige Federlaschen (32) mit Durchgangsloch aufweisen und ein Rastzapfen (26) die Federlaschen mit den Lageraugen (28) der Koppelstange verbindet.

6. Höhenverstellung nach einem der Ansprüche 1 bis 5,
**dadurch gekennzeichnet, dass** die Schwingen (22) auf der Abkröpfung (20) der Radachsen (16, 18) aufrastbar sind.

## Claims

1. A four-wheel height adjustment assembly for garden implements with a joint arrangement comprising a coupling bar (24) and rocker arms (22) which are pivotably connected thereto by way of retaining pins (26) and which engage cranked wheel axles (16, 18), **characterised in that** in the joint portion the ends of the coupling bar (24) and the rocker arms (22) are provided concentrically with respect to the latching pin axis with arcuate support bearing faces (30, 34) running against each other.

2. A height adjustment assembly according to claim 1 **characterised in that** the rocker arms (22) are connected to the coupling bar (24) by a retaining connection.

3. A height adjustment assembly according to claims 1 and 2 **characterised in that** the coupling bar ends carry two spaced bearing eyes (28), between which is disposed an arcuate joint shell (30) which is open at one side, and that the rocker arms (23) engage between the two eyes (28) and are supported with their arcuate support bearing faces (34) against the joint shell (30).

4. A height adjustment assembly according to claims 1 to 3 **characterised in that** the coupling bar (24) and/or rocker arms (22) are made from plastic profile members.

5. A height adjustment assembly according to claim 3 **characterised in that** the rocker arms (22) have two hooked spring lugs (32) which are arranged at an axial spacing relative to each other and have a through hole and a retaining pin (26) connects the spring lugs to the bearing eyes (28) of the coupling bar.

6. A height adjustment assembly according to one of claims 1 to 5 **characterised in that** the rocker arms (22) are latchable on the cranked configuration (20) of the wheel axles (16, 18).

## Revendications

1. Dispositif de réglage en hauteur à quatre roues pour engins de jardinage comportant une articulation, qui est composé d'une bielle (24) et de manivelles oscillantes (22) qui sont reliées à cette dernière de manière articulée par le biais de pivots (26) et qui sont en prise avec des essieux coudés (16, 18), **caractérisé en ce que**, dans la partie articulée, les extrémités de la bielle (24) et les manivelles oscillantes (22) sont dotées de manière concentrique par rapport à l'axe du pivot, de surfaces d'appui (30, 34) en arc de cercle se déplaçant l'une sur l'autre.

2. Dispositif de réglage en hauteur selon la revendication 1, **caractérisé en ce que** les manivelles oscillantes (22) et la bielle (24) sont assemblées par enclenchement.

3. Dispositif de réglage en hauteur selon les revendications 1 et 2, **caractérisé en ce que** les extrémités de la bielle portent deux bossages de palier (28) distants l'un de l'autre, entre lesquels se trouve une coquille d'articulation (30) en arc de cercle ouverte d'un côté, et **en ce que** les manivelles oscillantes (22) viennent se mettre en prise entre les deux bossages (28) et prennent appui sur la coquille d'articulation (30) avec leurs surfaces d'appui (34).

4. Dispositif de réglage en hauteur selon les revendications 1 à 3, **caractérisé en ce que** la bielle (24) et/ou les manivelles oscillantes (22) sont réalisées à partir de profilés en matière plastique.

5. Dispositif de réglage en hauteur selon la revendication 3, **caractérisé en ce que** les manivelles oscillantes (22) présentent deux jumelles de ressort (32) en forme de crochet distantes l'une de l'autre dans la direction axiale et présentant un trou, et **en ce qu'**une cheville d'arrêt (26) relie les jumelles de ressort aux bossages de palier (28) de la bielle.

6. Dispositif de réglage en hauteur selon l'une des revendications 1 à 5, **caractérisé en ce que** les manivelles oscillantes (22) peuvent être enclenchées sur la partie coudée (20) des essieux (16, 18).
